# EUROPEAN PATENT APPLICATION

(11) **EP 2 043 339 A1**
(43) Date of publication of application: **01.04.2009**
(21) Application number: 07721718.0
(22) Date of filing: 11.06.2007
(51) Int. Cl.: H04M 1/64

(54) **METHOD, DEVICE AND SYSTEM IMPLEMENTING MULTIMEDIA REDORDING**

(30) Priority: 30.06.2006 CN 200610091154
(71) Applicant: Huawei Technologies Co., Ltd., Shenzhen, Guangdong Province 518129 (CN)
(72) Inventor: FENG, Jiangping, Shenzhen Guangdong Province 518129 (CN)
(74) Representative: Pfenning, Meinig & Partner GbR
(86) International application number: PCT/CN2007/070097
(87) International publication number: WO 2008/003247

(57) **Abstract**

The present invention discloses a multimedia recording method. According to the method, a DTMF key sequence that indicates completion of multimedia recording is preset. The method includes the following steps: A media control apparatus notifies a media processing apparatus to start recording, and sends a DTMF key sequence to the media processing apparatus; when detecting that a key in the DTMF key sequence is pressed, the media processing apparatus stops recording and reports an event that indicates the completion of recording to the media control apparatus; after determining that the recording of multimedia information is complete, according to the received event, the media control apparatus notifies the media processing apparatus to store multimedia information, and the media processing apparatus stores the multimedia information to a storage space corresponding to a URI. The present invention also discloses two multimedia recording systems, two media control apparatuses, two media processing apparatuses, and another multimedia recording method. The preceding methods, systems and apparatuses enable a user to control normal completion of a multimedia recording process.

## Description

This application is a continuation of International Application No. PCT/CN2007/070097, filed on June 11, 2007, which claims the priority of Chinese application No. 200610091154.1 filed on June 30, 2006, titled "Method, System and Apparatus for Implementing Multimedia Recording", the entire contents of which are all incorporated herein by reference.

### Field of the Invention

The present invention relates to the multimedia communication technology, and in particular, to a method, system, and apparatus for implementing multimedia recording.

### Background of the Invention

The multimedia recording service is a common service provided by a telecom network, and covers audio, video, image and so on. One of the most common multimedia recording services is the audio mailbox service. When the called party is powered off, out of the service area, or is inconvenient to answer a call, the audio mailbox, like an answerphone can store the messages left by the calling party so that the called party can listen to the messages at any time.

In a communication network where the media control apparatus is separate from the media processing apparatus, the ITU-T H.248 protocol (media gateway control protocol) is generally used to standardize the communication between the media control apparatus and the media processing apparatus; and the recording package in the H.248.9 protocol (extended from H.248) is used to provide the multimedia recording function.

The recording package in the H.248.9 protocol defines several timers: pre-speech timer, indicating the duration of silence allowed before a user speaks; post-speech timer, indicating the duration of silence that needs to elapse before the system stops recording after the user finishes speaking; and a recording duration timer, indicating the maximum recording duration allowed by the system, upon timeout of which the system will forcibly terminate the recording.

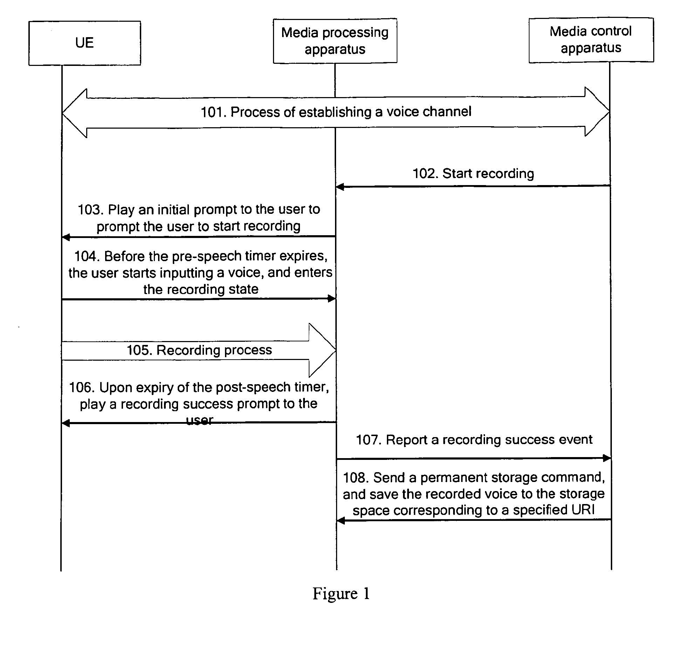

Figure 1 is a flowchart of the audio recording method in the audio package as defined in H.248.9. As shown in Figure 1, the method includes the following steps:

Step 101: The media control apparatus exchanges call signaling with the user equipment (UE) to establish an audio channel.

Step 102: The media control apparatus sends a recording start signal to the media processing apparatus.

Step 103: The media processing apparatus receives the recording start signal, and plays an initial prompt to prompt the user to start recording, such as "Please leave a message after hearing a beep, and press the * key to give up."

Step 104: Before the pre-speech timer times out, the media processing apparatus detects the audio input by the user, and enters the recording state.

Step 105: The media processing apparatus records the audio of the user.

Step 106: When the post-speech timer of the media processing apparatus times out, it indicates that the user has completed audio inputting; the media processing apparatus plays a prompt to the user to indicate that the recording succeeds.

Step 107: The media processing apparatus reports a recording success event to the media control apparatus.

Step 108: After receiving the recording success event, the media control apparatus sends a permanent storage command to the media processing apparatus. The media processing apparatus saves the recording result to a storage space corresponding to a specified universal resource identifier (URI), and the recording is complete.

So far, the audio recording is complete. In the preceding method, the completion of the recording is indicated by the timeout of the post-speech timer of the media processing apparatus, that is, the user cannot freely terminate the recording. Besides, the audio package provides two other modes of terminating the recording: the recording is terminated forcibly upon timeout of the recording duration timer; and the recording is terminated when the media processing apparatus detects that the Return Key is pressed by the user.

In the process of research and practice, the inventor discovers that in the prior art, the termination of the recording is fully controlled by the network device; a user has to accept the termination passively, and cannot control normal completion of the recording actively. Moreover, the preceding three recording methods have the following problems:

After the user stops inputting audio, the user has to keep silent and wait for timeout of the post-speech timer before the recording can be complete; the user is unable to inform the recording system about completion of the recording, which does not suit the user's operation habits.

Further, after the user stops inputting audio, if the user is in a noisy environment, the media processing apparatus may mistake noises for audios. In this case, the post-speech timer will not be started, and the media processing apparatus does not determine completion of the recording until the recording duration timer times out. This wastes resources of the media processing apparatus.

Besides, after the user presses the Return Key, the recording have to be given up, and the media processing apparatus does not save the already recorded audios.

### Summary of the Invention

An embodiment of the present invention provides a multimedia recording method so that a user can control normal completion of multimedia recording.

An embodiment of the present invention discloses a multimedia recording method, wherein a dual tone multi frequency (DTMF) key sequence which indicates completion of multimedia recording is preset, and the method includes:
a media control apparatus notifies a media processing apparatus to start recording, and sends a DTMF Key sequence to the media processing apparatus;
the media processing apparatus stops recording and reports an event that indicates the completion of recording to the media control apparatus after detecting that a key in the DTMF key sequence is pressed;
the media control apparatus notifies the media processing apparatus to store the multimedia information after determining the completion of recording the multimedia information according to the received event; and
the media processing apparatus stores the multimedia information to a storage space corresponding to a URI.

An embodiment of the present invention also provides a multimedia recording system so that a user can control normal completion of multimedia recording.

The multimedia recording system based on the foregoing method provided in an embodiment of the present invention includes a media control apparatus and a media processing apparatus, wherein:
the media control apparatus is adapted to store a preset DTMF key sequence that indicates completion of multimedia recording, send a recording start notification and a DTMF key sequence to the media processing apparatus, receive an event that indicates the completion of recording from the media processing apparatus, and instruct the media processing apparatus to store the recorded multimedia information when the media processing apparatus finishes recording the multimedia information; and
the media processing apparatus is adapted to receive a recording start notification and a DTMF key sequence sent by the media control apparatus, stop recording and report an event about the completion of recording to the media control apparatus after detecting that a key in the DTMF key sequence is pressed, receive a notification of storing the recorded multimedia information sent by the media control apparatus, and store the multimedia information to a storage space corresponding to a URI.

An embodiment of the present invention provides a media control apparatus so that a user can control normal completion of multimedia recording.

A media control apparatus disclosed in an embodiment of the present invention includes:
a storage module, adapted to store a preset DTMF key sequence that indicates completion of multimedia recording;
a first communication module, adapted to send a recording start notification and a DTMF key sequence to a media processing apparatus, and receive an event that indicates the completion of recording reported by the media processing apparatus; and
a first recording control module, adapted to judge whether the media processing apparatus has recorded multimedia information according to the event that indicates the completion of recording reported by the media processing apparatus, and, if the multimedia information has been recorded, instruct the media processing apparatus to store the recorded multimedia information.

An embodiment of the present invention also provides a media processing apparatus so that a user can control normal completion of multimedia recording.

A media processing apparatus disclosed in an embodiment of the present invention includes:
a second communication module, adapted to receive a recording start notification and a DTMF key sequence sent by a media control apparatus;
a second key detecting module, adapted to detect the pressing of keys of a UE, and, when detecting that a key in the DTMF key sequence is pressed, notify the second recording control module; and
a second recording control module, adapted to stop recording according to the notification from the second key detecting module, report an event about the completion of recording to the media control apparatus through the second communication module, and after receiving a notification of storing the recorded multimedia information sent by the media control apparatus through the second communication module, store the multimedia information to a storage space corresponding to a URI.

An embodiment of the present invention also provides a multimedia recording method so that a user can control normal completion of multimedia recording.

A multimedia recording method disclosed in an embodiment of the present invention includes:
a media control apparatus notifies a media processing apparatus to start recording, and instructs the media processing apparatus to detect the key operation event of a UE;
the media processing apparatus reports the key operation event to the media control apparatus after detecting a key operation event;
the media control apparatus notifies the media processing apparatus to stop recording and reports statistic information after determining that a key indicating the completion of recording is pressed according to the received key operation event;
the media processing apparatus stops recording, and reports statistic information to the media control apparatus;
the media control apparatus notifies the media processing apparatus to store the multimedia information after determining the completion of recording the multimedia information according to the received statistic information; and
the media processing apparatus stores the multimedia information in a storage space corresponding to a URI.

An embodiment of the present invention provides a multimedia recording system so that a user can control normal completion of multimedia recording.

The multimedia recording system disclosed in an embodiment of the present invention includes:
a media control apparatus, adapted to instruct a media processing apparatus to start recording, instruct the media processing apparatus to detect the key operation event of a UE, when receiving a key operation event about completion of multimedia recording reported by the media processing apparatus, send a command for stopping recording and a request for reporting statistic information to the media processing apparatus, and when the media processing apparatus has recorded multimedia information, instruct the media processing apparatus to store the recorded multimedia information; and
a media processing apparatus, adapted to receive the recording start notification sent by the media control apparatus, report a key operation event to the media control apparatus after detecting a key operation on the UE, receive the command for stopping recording and the statistic information request from the media control apparatus, report statistic information to the media control apparatus, and receive a notification of storing the recorded multimedia information sent by the media control apparatus, and store the multimedia information to a storage space corresponding to a URI.

An embodiment of the present invention also provides a media control apparatus so that a user can control normal completion of multimedia recording.

A media control apparatus disclosed in an embodiment of the present invention includes:
a third communication module, adapted to instruct a media processing apparatus to start recording, detect the key operation on a UE, and receive the key operation event reported by the media processing apparatus;
a key judging module, adapted to notify a third recording control module when receiving a key operation event about completion of multimedia recording; and
a third recording control module, adapted to send a command for stopping recording and a request for reporting statistic information to the media processing apparatus through the third communication module according to the notification from the key judging module, after determining that the media processing apparatus has recorded multimedia information according to the statistic information reported by the media processing apparatus, instruct the media processing apparatus to store the recorded multimedia information through the third communication module.

An embodiment of the present invention also provides a media processing apparatus so that a user can control normal completion of multimedia recording.

A media processing apparatus disclosed in an embodiment of the present invention includes:
a fourth communication module, adapted to receive a notification about starting recording and detecting the key operations on a UE, and a command for stopping recording sent by a media control apparatus;
a fourth key detecting module, adapted to report a key operation event to the media control apparatus through the fourth communication module after detecting a key operation on the UE; and
a fourth recording control module, adapted to stop recording according to the command for stopping recording, report statistic information to the media control apparatus through the fourth communication module, and after receiving a notification of storing the recorded multimedia information sent by the media control apparatus through the fourth communication module, store the multimedia information to a storage space corresponding to a URI.

The multimedia recording solution disclosed in embodiments of the present invention presets a DTMF key sequence for terminating recording. The recording is terminated when it is detected that the user presses a key in the DTMF key sequence. In this way, the user controls the completion of multimedia recording.

Specifically, after inputting multimedia information, a user can press an End Input Key to terminate the recording, without waiting for timeout of the post-speech timer. This suits the operation habit of the user. Moreover, even if the user is in a noisy environment, the post-speech timer does not start because it mistakes noises for audios, but the user can press a key to terminate the recording actively, without waiting for timeout of the recording duration timer. This does not waste resources of the media processing apparatus. After the user presses the End Input Key, the media processing apparatus stores the recorded multimedia information, thus preventing the loss of recorded multimedia information.

### Brief Description of the Drawings

Figure 1 is a flowchart of the audio recording method using the audio package as defmed in H.248.9 in the prior art;

Figure 2 is a flowchart of a first preferred multimedia recording method in an embodiment of the present invention;

Figure 3 is a flowchart of audio recording method according to the first preferred multimedia recording method in an embodiment of the present invention;

Figure 4 shows the first preferred structure of the multimedia recording system in an embodiment of the present invention;

Figure 5 is a flowchart of the second preferred multimedia recording method in an embodiment of the present invention;

Figure 6 is a flowchart of audio recording method according to the second preferred multimedia recording method in an embodiment of the present invention; and

Figure 7 shows the second preferred structure of the multimedia recording system in an embodiment of the present invention;

### Detailed Description of the Embodiments

For better understanding of the objectives, technical solution and merits of the present invention, the present invention is hereinafter described in detail with reference to accompanying drawings and preferred embodiments.

The technical solution of the present invention is applicable to fixed networks, wideband code division multiple access/code division multiple access (WCDMA/CDMA) networks, IP multimedia subsystem (IMS) networks, and all network environments that control the media resource devices through the H.248 protocol.

In a network environment that controls the media resource devices through the H.248 protocol, media control apparatuses include: media gateway controller (MGC), mobile switching center server (MSC-server), and media resource control function (MRCF); media processing apparatuses include: media gateway (MGW), and media resource processing function (MRPF).

The embodiments of the present invention provide two preferred multimedia recording methods:

In the first preferred method, a DTMF key sequence for terminating recording is preset, and a media processing apparatus detects the key operations of a user; when detecting that the user presses an End Input Key, the media processing apparatus terminates the recording, and reports an event about the completion of recording to a media control apparatus.

In the second preferred method, a media processing apparatus reports the key operation event to a media control apparatus after detecting a key operation event; the media control apparatus notifies the media processing apparatus to stop recording and report statistic information after determining that a key indicating the completion of recording is pressed according to the received key operation event.

The preceding two preferred methods are hereinafter described through embodiments.

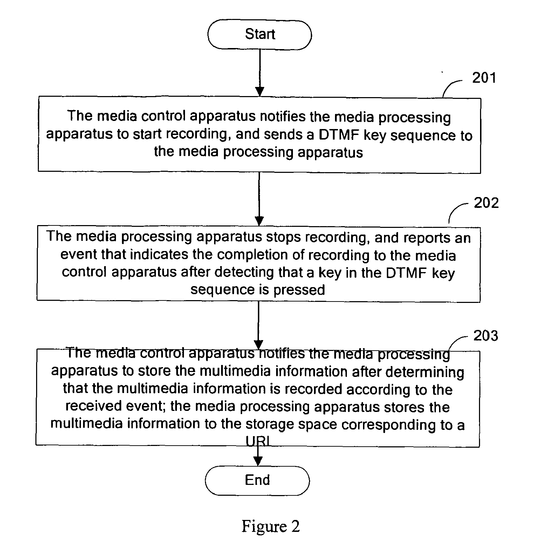

Figure 2 is a flowchart of the first preferred multimedia recording method in an embodiment of the invention. According to the method, a DTMF key sequence that indicates completion of multimedia recording is preset. As shown in Figure 2, the method includes the following steps:

Step 201: The media control apparatus notifies the media processing apparatus to start recording and sends a DTMF key sequence to the media processing apparatus.

Step 202: The media processing apparatus stops recording, and reports an event that indicates the completion of recording to the media control apparatus after detecting that a key in the DTMF key sequence is pressed.

Step 203: The media control apparatus notifies the media processing apparatus to store the multimedia information after determining the completion of recording the multimedia information according to the received event; the media processing apparatus stores the multimedia information to a storage space corresponding to a URI.

So far, the multimedia recording process is complete.

The following takes the audio recording in a network environment where the MGC and MGW are adopted to provide multimedia services as an example to describe the first preferred method in Figure 2.

According to this embodiment, a DTMF key sequence that indicates completion of multimedia recording in the MGC is preset. The DTMF key sequence may consist of one or more DTMF keys, and may contain such characters as 0 to9, A to D, a to d, * or #. If the preset DTMF key sequence consists of multiple DTMF keys, the following rule may be applicable: pressing any one of the set keys indicates completion of recording, or pressing all the set keys indicates completion of recording. If only one DTMF key is set, pressing this key indicates completion of recording. For example, the DTMF key sequence preset in this embodiment is #. Therefore, when the user presses the # key, the recording is complete.

Therefore, this embodiment adds a parameter to the recording start signal of the automatic announcement subsystem (AAS) recording package in the existing H.248.9 protocol, so as to detect the DTMF key sequence that the user inputs to terminate the recording. This parameter is described below:
Parameter Name: EndInputKeyf
ParameterID: eik (0x0004)
Description: This parameter defines a key sequence including one or more keys. After the key sequence is pressed, the recording is complete. At the same time, a recording success event is reported to the media control apparatus. If the user does not input audios at this time, the event indicates that the recording is stopped by the <EndInputKey>, and no audio is recorded; if the user inputs audios, the event indicates that the recoding is stopped by the <EndInputKey>, and audios are recorded.
Type: String
Optional: Yes
Possible values: One DTMF key value or a string of DTMF key values, including 0 - 9, A- D or a- d, * or #.
Default: None

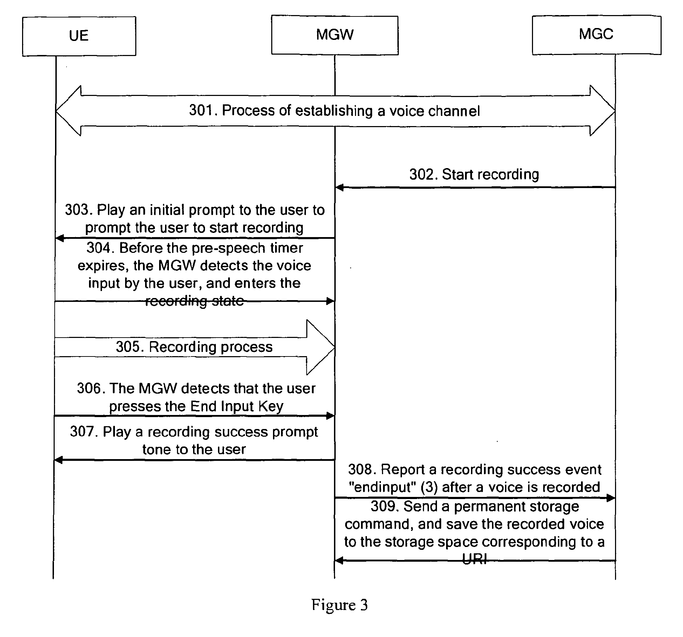

Figure 3 is a flowchart of audio recording according to the first preferred multimedia recording method in an embodiment of the present invention. As shown in Figure 3, the method includes the following steps:

Step 301: The MGC exchanges call signaling with the UE to establish an audio channel.

Step 302: The MGC sends a recording start signal to the MGW, with the DTMF key sequence included in the signal.

Step 303: The MGW receives the recording start signal, prepares for recording audio, and starts detecting the DTMF event of the UE.

In step 303, the MGW may play an initial prompt like "Please leave a message after hearing a beep, and press the # key to end recording or press the * key to give up" to the user to prompt the user to start recording.

Step 304: Before the pre-speech timer times out, the MGW detects the audio input by the user, and enters the recording state.

Step 305: The MGW records the audio of the user.

Step 306: The MGW detects that a key in the DTMF key sequence is pressed.

In step 306, the MGW may detect that the user presses a key to terminate the recording in the following two conditions:

a. After the user inputs an audio, the MGW detects that the End Input Key is pressed; or

b. Before the user inputs an audio, the MGW detects that the End Input Key is pressed, specifically:

b1. During an initial prompt is played, the MGW detects that the End Input Key is pressed;

b2. During no input prompt is played, the MGW detects that the End Input Key is pressed; or

b3. During the silence period after the prompt is played, the MGW detects that the End Input Key is pressed.

This method supposes the MGW detects that any key in the DTMF key sequence is pressed after the user inputs an audio.

Step 307: The MGW stops recording.

In step 307, the MGW may prompt the user about successful recording, for example, by playing a prompt of successful recording to the user, or displaying a message of successful recording on the UE.

Step 308: The MGW reports an event to the MGC, indicating completion of recording.

In step 308, the MGW may report a recording success event that carries a recording result parameter to the MGC to indicate the completion of recording. Before reporting the recording success event to the MGC, the MGW needs to judge whether user audios are already recorded. If user audios are recorded, the reported recording success event carries a recording result parameter, which indicates that the End Input Key is pressed and the audios are recorded. If no user audio is recorded, the reported recording success event carries a recording result parameter, which indicates that the End Input Key is pressed and no audio is recorded.

This embodiment modifies the event descriptor parameter reported by the AAS recording package defined in the existing H.248.9 protocol, and adds two result parameter values such as "endinput" (3) and "endinput_norecord" (4) in the recording result parameter. "endinput" (3) indicates that pressing of the End Input Key is detected and audios are recorded; endinput_norecord 4 indicates that pressing of the End Input Key is detected and no audio is recorded. Here 3 and 4 are examples only, and all numbers except 0, 1 and 2 may be used to indicate the two result parameter values (the result parameter values 0, 1 and 2 are already defined in the AAS recording package).

In this embodiment, the user audio is recorded. Therefore, the reported result parameter is 3.

Step 309: After receiving the recording success event, the MGC judges whether the multimedia information is recorded according to the recording result parameter; if the multimedia information is recorded, the MGC sends a permanent storage command to the MGW. The MGW stores the recording result to a storage space corresponding to a specified URI.

In this embodiment, recording results 3 and 4 are used as examples to indicate whether multimedia information is recorded before the End Input Key is pressed. Therefore, in step 309, the recording result parameter may be judged through the following steps: first, the MGC judges whether the recording result parameter value is 3 or 4;

If the recording result parameter is neither 3 nor 4, the recording is terminated in the existing mode in the former AAS recording package. Therefore, the corresponding processing module in the AAS recording package should be invoked to terminate this process.

If the recording result parameter is 3 or 4, the MGC further judges whether the recording result is 3. If the recording result parameter is 3, the audio is recorded before pressing of the End Input Key is detected, and the record file should be saved. Therefore, the MGC sends a permanent storage comm and to the MGW. The MGW stores the recorded audio of the user to a storage space corresponding to a URI, and the recording process is complete. If the recording result parameter is not 3, no audio is recorded before pressing of the End Input Key is detected, no record file needs to be saved, and the recording process is terminated.

In step 308, the recording result value in this embodiment is 3. Therefore, after making a judgment, the MGC sends a permanent storage command to the MGW, and the MGW saves the recorded audio of the user to a storage space corresponding to a specified URI.

Now, the audio recording is complete. In the preceding embodiment, the audio recording method under the present invention is described, supposing the MGW detects that a key in the DTMF key sequence is pressed after the user inputs audios. If the MGW detects that a key in the DTMF key sequence is pressed before the user inputs an audio, step 304, step 305 and step 309 are not executed, and the recording result value reported by the MGW to the MGC in step 308 is set to 4.

Supposing the MGC is the media control apparatus and the MGW is the media processing apparatus, the following describes a multimedia recording system, a media control apparatus and a media processing apparatus corresponding to the first preferred multimedia recording method.

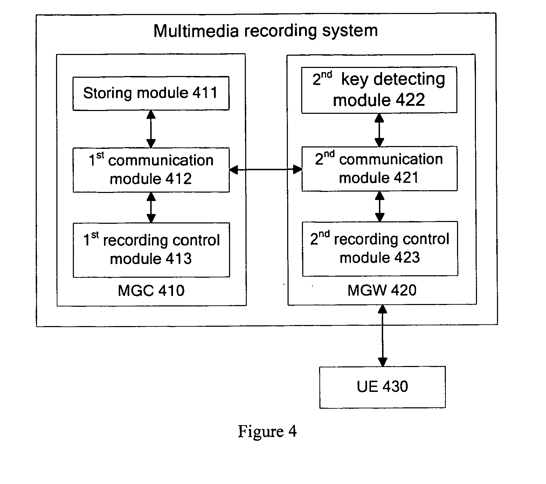

Figure 4 shows the first preferred structure of the multimedia recording system in an embodiment of the present invention. As shown in Figure 4, the system includes an MGC 410 and an MGW 420.

In this embodiment, the MGC 410 is adapted to store a pres et DTMF key sequence that indicates completion of multimedia recording, send a recording start notification and a DTMF key sequence to the MGW 420. Besides, the MGC 410 is adapted to receive an event that indicates the completion of recording reported by the MGW 420 and instruct the MGW 420 to store the recorded multimedia information when the MGW 420 finishes recording the multimedia information.

The MGW 420 is adapted to receive a recording start notification and a DTMF key sequence sent by the MGC 410 and stop recording and report an event that indicates the completion of recording to the MGC 410 after detecting that any key in the DTMF key sequence is pressed. Besides, the MGW 420 is adapted to receive a notification of storing the recorded multimedia information sent by the MGC 410, and store the multimedia information to a storage space corresponding to a URI.

In this embodiment, the MGW 420 may be further adapted to play an initial prompt carrying a DTMF key sequence to a UE 430 and send a recording success prompt to the UE 430.

The MGC 410 in the system shown in Figure 4 may include: a storage module 411, a first communication module 412, and a first recording control module 413. The MGW 420 may include: a second communication module 421, a second key detecting module 422 and a second recording control module 423.

The storage module 411 is adapted to store a preset DTMF key sequence that indicates completion of multimedia recording.

The first communication module 412 is adapted to send a recording start notification and a DTMF key sequence to the second communication module 421 in the MGW 420, and receive an event that indicates the completion of recording reported by the second communication module 421 in the MGW 420.

The first recording control module 413 is adapted to judge whether the MGW 420 has recorded multimedia information according to the event that indicates the completion of recording reported by the MGW 420, and, if multimedia information has been recorded, instruct the MGW 420 to store the recorded multimedia information through the first communication module 411.

The second communication module 421 is adapted to receive a recording start notification and a DTMF key sequence sent by the first communication module 411 in the MGC 410.

The second key detecting module 422 is adapted to detect the pressing of keys of a UE, and, when detecting that a key in the DTMF key sequence is pressed, notify the second recording control module 423.

The second recording control module 423 is adapted to stop recording according to the notification from the second key detecting module 422; through the second communication module 421, report an event about the completion of recording to the MGW 410; and after receiving a notification of storing the recorded multimedia information sent by the MGW 410 through the second communication module 421, store the multimedia information to a storage space corresponding to a URI.

The MGW 410 in Figure 4 may further include: a prompting module, adapted to play an initial prompt carrying a DTMF key sequence to the user and play a recording success prompt to the user upon completion of recording.

The preceding solution reveals that, compared with the prior art, the present invention allows the user to control normal termination of the multimedia recording process. This suits the operation habit of the user and facilitates the user to terminate the multimedia recording process. Besides, this saves the resources of the media processing apparatus and improves the resource utilization.

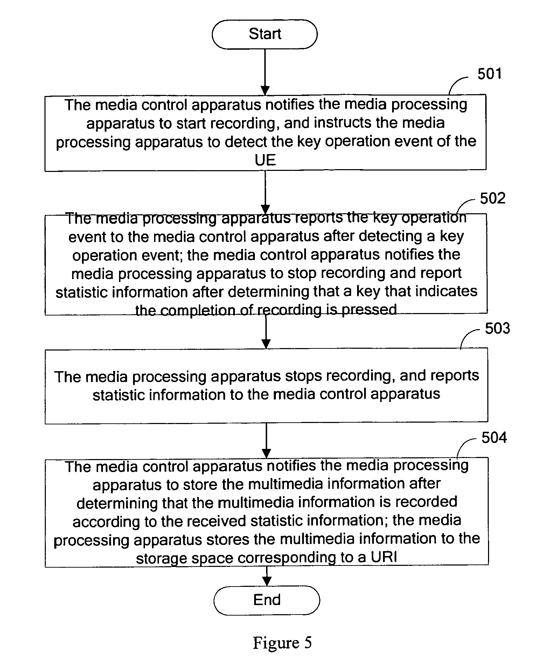

Figure 5 is a flowchart of the second preferred multimedia recording method in an embodiment of the present invention. As shown in Figure 5, the method includes the following steps:

Step 501: The media control apparatus notifies the media processing apparatus to start recording and instructs the media processing apparatus to detect the key operation event of the UE.

Step 502: The media processing apparatus reports the key operation event to the media control apparatus after detecting a key operation event. The media control apparatus notifies the media processing apparatus to stop recording after determining that a key that indicates the completion of recording is pressed according to the received key operation event.

Step 503: The media processing apparatus stops recording, and reports statistic information to the media control apparatus.

Step 504: The media control apparatus notifies the media processing apparatus to store the multimedia information after determining the completion of recording the multimedia information according to the received statistic information. The media processing apparatus stores the multimedia information to a storage space corresponding to a URI.

The following takes the audio recording in a network environment where the MGC and MGW are adopted to provide multimedia services as an example to describe the second preferred method in Figure 5.

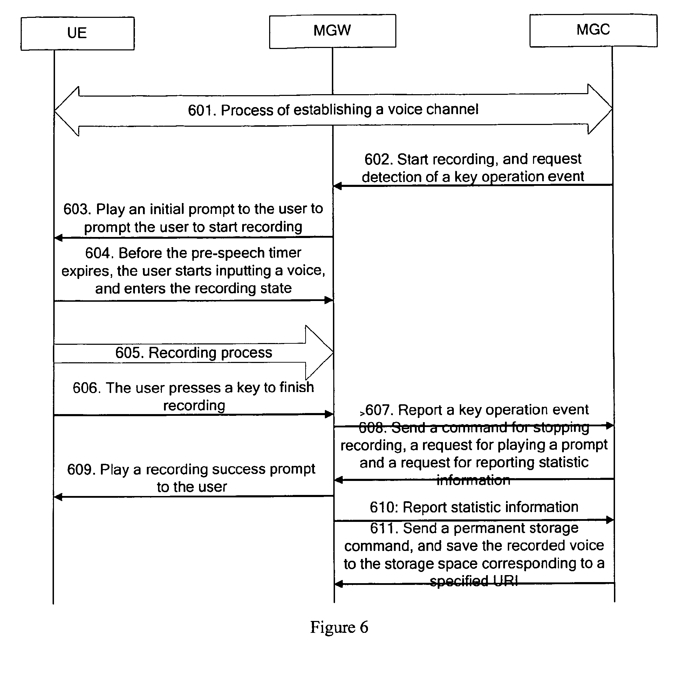

Figure 6 is a flowchart of audio recording method according to the second preferred multimedia recording method in an embodiment of the present invention. As shown in Figure 6, the method includes the following steps:

Step 601: The MGC exchanges call signaling with the UE to establish an audio channel.

Step 602: The MGC sends a recording start signal to the MGW, and instructs the MGW to detect the key operation event of the UE.

Step 603: The MGW receives the recording start signal, prepares for audio recording, and starts detecting the key operation event of the UE.

In step 603, the MGW may play an initial prompt like "Please leave a message after hearing a beep, and press the # key to end recording or press the* key to give up" to the user to prompt the user to start recording.

Step 604: Before the pre-speech timer times out, the MGW detects the audio input by the user, and enters the recording state.

Step 605: The MGW records the audio of the user.

Step 606: The MGW detects the key operation event.

Step 607: The MGW reports a key operation event to the MGC.

Step 608: After receiving the key operation event, the MGC checks the key operation. If a key indicating the completion of recording is pressed, the MGC sends a command for stopping recording and a request for statistic information to the MGW.

In step 608, the MGC may further request the MGW to send a recording success prompt to the UE.

Step 609: After receiving the request sent by the MGC, the MGW stops recording.

In step 609, the MGW may prompt the user about successful recording according to the request of the MGC, for example, by playing a prompt of successful recording to the user, or displaying a message of successful recording on the UE.

Step 610: The MGW sends a message about successful termination of recording to the MGC, and sends statistic information that carries a recording result parameter.

In step 610, before the MGW reports statistic information to the MGC, same as in embodiment 1, the MGW needs to judge whether user audios are already recorded. If user audios are recorded, the reported statistic information carries a recording result parameter, which indicates that the End Input Key is pressed and audios are recorded. If no user audio is recorded, the reported statistic information carries a recording result parameter, which indicates that the End Input Key is pressed and no audio is recorded.

The statistic parameters set by this embodiment include the length of the initial prompt, the number of iterations (i.e. the number of times the initial prompt is played), recording result, location of the record file, recording duration, and size of the record file. In a specific embodiment, proper statistic parameters can be defined according to actual requirements.

According to the preceding definitions, the statistic descriptor parameters reported by the AAS recording package defined in the existing H.248.9 protocol are modified, and these statistic parameters are added: length of the initial prompt, number of iterations, recording result, location of the record file, recording duration, and size of the record file. The parameters are described below:

### Length of initial prompt:

Parameter Name: Length of initial prompt
ParameterID: ap (0x0001)
Description: Duration of the initial prompt
Type: Integer
Possible values: Any positive integer

### Number of iterations:

Parameter Name: Number of iterations
ParameterID: na (0x0002)
Description: Number of times the initial prompt is played
Type: Integer
Possible values: Any positive integer of the recording result parameter greater than 1:

Parameter Name: Recording result
ParameterID: res (0x0003)
Description: Mode of terminating the recording process successfully
Type: Enumeration
Possible values:
   *Normal 0:* indicates that an audio is recorded, and the termination of audio is detected before timeout of the recording duration timer;
   *trunc 1*: indicates that an audio is recorded, but the recorded audio is truncated due to timeout of the recording duration timer;
   *keyend 2*: indicates that pressing of the Return Key is detected, and no audio is recorded;
   *endinput 3*: indicates that pressing of the End Input Key is detected, and audios are recorded;
   *endinput_norecord 4:* indicates that pressing of the End Input Key is detected, and no audio is recorded.

### Location of record file:

Parameter Name: Location of record file:
ParameterID: ri (0x0004)
Description: Location of the record file
Type: String
Possible values: Any identifier in compliance with the H248.9 definitions. If the parameter is in the format of http:// URI, it must not have a query part:

### Recording Duration

Parameter Name: Record duration
ParameterID: rdur (0x0005)
Description: Length of the record file
Type: Integer
Possible values: Any positive integer

### Size of record file:

Parameter Name: Size of record file:
ParameterID: rfs (0x0006)
Description: Number of bytes in a record file
Type: Integer
Possible values: Any positive integer

In this embodiment, the user audio is recorded. Therefore, the reported result parameter is 3.

Step 611: After receiving the reported statistic information, the MGC judges whether the multimedia information is recorded according to the recording result parameter. If the multimedia information is recorded, the MGC sends a permanent storage command to the MGW, and the MGW stores the recorded audio to a storage space corresponding to a specified URI.

In this step, the process of judging the recording result parameter is the same as that in step 309 in preferred embodiment 1, so it is omitted here. In this embodiment, the recording result value is 3. Therefore, the MGC sends a permanent storage command to the MGW, and the MGW stores the recorded audio of the user to a storage space corresponding to a specified URI.

So far, the audio recording process is complete. The preceding embodiment takes the condition in which a key that indicates the completion of recording is pressed after the user inputs audios as an example to describe the audio recording method in the present invention. If the MGW detects that a key that indicates the completion of recording is pressed before the user inputs audios, step 604, step 605 and step 611 are not executed, and the recording result value reported by the MGW to the MGC in step 610 is set to 4.

The following still takes the MGC and MGW as examples to describe the specific implementation modes of the multimedia recording system, media control apparatus and media processing apparatus corresponding to the second preferred method.

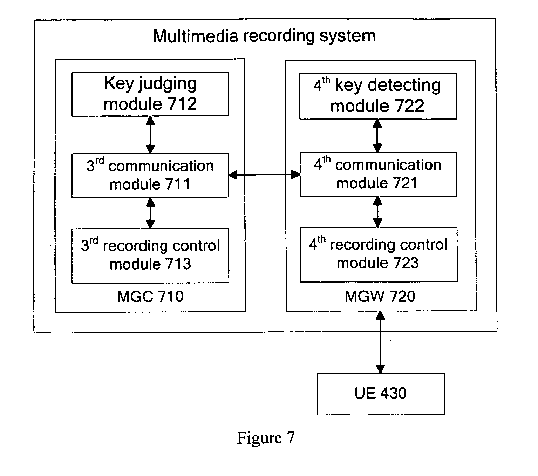

Figure 7 shows the second preferred structure of the multimedia recording system in an embodiment of the present invention. As shown in Figure 7, the system includes an MGC 710 and an MGW 720.

In this embodiment, the MGC 710 is adapted to: send a recording start notification to the MGW 720, and instruct the MGW 720 to detect the key operation event of a UE 430; receive the key operation event reported by the MGW 720; when receiving a key operation event that indicates completion of multimedia recording reported by the MGW 720, send a command for stopping recording and a request for reporting statistic information to the MGW 720; and when the MGW 720 has recorded multimedia information, instruct the MGW 720 to store the recorded multimedia information.

The MGW 720 is adapted to: receive a recording start notification sent by the MGC 710; report a key operation event to the MGC 710 after detecting a key operation on the UE 430; receive the command for stopping recording and the statistic information request from the MGC 710, and report statistic information to the MGC 710; receive a notification of storing the recorded multimedia information sent by the MGC 710, and store the multimedia information to a storage space corresponding to a URI.

In this embodiment, the MGC 710 may further require the MGW 720 to prompt the UE 430 about successful recording; and the MGW 720 may also be adapted to prompt the UE 430 about successful recording.

In the system shown in Figure 7, the MGC 710 may include: a third communication module 711, a key judging module 712, and a third recording control module 713; and the MGW 720 may include: a fourth communication module 721, a fourth key detecting module 722 and a fourth recording control module 723.

The third communication module 711 is adapted to notify the fourth communication module 721 in the MGW 720 to start recording and detect the key operations on the UE 430, and receive a key operation event reported by the fourth communication module 721 in the MGW 720.

The key judging module 712 is adapted to: judge whether a received key operation event indicates completion of multimedia recording, and, after receiving a key operation event that indicates the completion of multimedia recording, notify the third recording control module 713.

The third recording control module 713 is adapted to: send a command for stopping recording and a request for reporting statistic information to the MGW 720 through the third communication module 711 according to the notification sent by the key judging module 712; after determining that the MGW 720 has recorded multimedia information according to the statistic information reported by the MGW 720, instruct the MGW 720 to store the recorded multimedia information through the third communication module 711.

The fourth communication module 721 is adapted to: receive a notification of starting recording and detecting the key operations on the UE 430 sent by the third communication module 711 in the MGC 710; notify the fourth key detecting module 722 to detect the key operations on the UE; receive a command for stopping recording from the third communication 711 in the MGC 710; and notify the fourth recording control module to stop recording.

The fourth key detecting module 722 is adapted to: detect the key operations on the UE according to a notification of starting recording received by the fourth communication module 721, and, when detecting a key operation on the UE 430, report the key operation event to the MGW 710 through the fourth communication module 721.

The fourth recording control module 723 is adapted to: stop recording according to the command for stopping recording received by the fourth communication module 721; through the fourth communication module 721, report statistic information to the MGC 710; and after receiving a notification of storing the recorded multimedia information sent by the MGW 710 through the fourth communication module 721, store the multimedia information to a storage space corresponding to a URI.

The preceding solution reveals that, the embodiments of the present invention enable a user to control normal termination of the multimedia recording process. Therefore, in the process of recording multimedia information, the user can be more proactive and timely terminate the recording, thus saving the resources of the media processing apparatus. Besides, the present invention enables the MGW to report statistic information to the MGC so that the MGC can obtain important information such as the number of iterations, location of the record file, and recording duration.

The multimedia recording system disclosed by the present invention may also be compatible with former recording modes. That is, the user can terminate the multimedia recording process by pressing a key, or through former processes in the prior art.

The embodiments of the present invention enable a user to control the termination of recording multimedia information. Specifically, after inputting the multimedia information, a user can press an End Input Key to terminate the recording, without waiting for timeout of the post-speech timer. Moreover, even if the user is in an environment with high noises and the post-speech timer does not start because it mistakes noises for audios, the user can press a key to terminate the recording actively, without waiting for timeout of the recording duration timer. This does not waste resources of the media processing apparatus. After the user presses the End Input Key, the media processing apparatus stores the recorded multimedia information, thus preventing loss of the recorded multimedia information. Furthermore, when detecting a key operation of the user, the media processing apparatus may report the key operation event to the media control apparatus, and the media control apparatus controls the media processing apparatus to terminate the recording, play a recording success prompt to the user, and report statistic information. Therefore, the media control apparatus can obtain important information such as the number of iterations, recording result, location of record file, and recording duration.

The preceding embodiments are exemplary embodiments of the present invention only and not intended to limit the present invention. Any modification, equivalent substitution or improvement without departing from the spirit and principle of the present invention should be covered in the scope of protection of the present invention.

## Claims

1. A method for implementing multimedia recording, **characterised by** comprising:
a DTMF key sequence that indicates completion of multimedia recording is preset, wherein the method further comprises:
instructing, by a media control apparatus, a media processing apparatus to start recording, and sending the DTMF key sequence to the media processing apparatus;
stopping recording and reporting an event that indicates the completion of recording to the media control apparatus by the media processing apparatus, after detecting that a key in the DTMF key sequence is pressed;
instructing, by the media control apparatus, the media processing apparatus to store the multimedia information after determining the completion of recording the multimedia information according to the received event; and
storing, by the media processing apparatus, the multimedia information to a storage space corresponding to a URI.

2. The method of claim 1, **characterised in that** the notifying, by a media control apparatus, a media processing apparatus to start recording and sending the DTMF key sequence to the media processing apparatus comprises:
sending, by the media processing apparatus, a recording start signal carrying the DTMF key sequence to the media control apparatus.

3. The method of claim 1, **characterised in that,** the DTMF key sequence comprises multiple DTMF keys, and wherein a key in the DTMF key sequence is pressed comprises:
any key in the multiple DTMF keys is pressed.

4. The method of claim 1, **characterised in that,** the DTMF key sequence comprises multiple DTMF keys, and pressing the key in the DTMF key sequence comprises:
pressing all keys in the DTMF key sequence.

5. The method of claim 1, **characterised in that,** the reporting an event that indicates the completion of recording to the media control apparatus by the media processing apparatus comprises:
reporting, by the media processing apparatus, a recording success event carrying a recording result parameter to the media control apparatus.

6. The method of claim 5, **characterised in that,** if the key in the DTMF is pressed before a user inputs a multimedia information, the recording result parameter comprises: parameters indicating that an End Input Key is pressed and no multimedia information is recorded.

7. The method of claim 5, **characterised in that,** if the key in the DTMF is pressed after a user inputs a multimedia information, the recording result parameter comprises: parameters indicating that an End Input Key is pressed and multimedia information is recorded.

8. The method of claim 1, **characterised in that,** the notifying, by the media control apparatus, the media processing apparatus to store the multimedia information comprises:
sending a permanent storage command to the media processing apparatus by the media control apparatus.

9. The method of claim 1, **characterised in that,** after sending the DTMF key sequence to the media processing apparatus by the media control apparatus, the method further comprises:
playing an initial prompt carrying the DTMF key sequence to a UE by the media processing apparatus.

10. The method of claim 1, **characterised in that,** after stopping recording, the method further comprises:
sending a recording success prompt to the UE.

11. The method of claim 5, **characterised in that** the determining the completion of recording the multimedia information comprises:
determining, by the media control apparatus, whether the multimedia information is recorded according to the recording result parameter, and if the multimedia information is recorded, determining that the multimedia information is recorded.

12. A system for implementing multimedia recording, **characterised in that** the system comprises a media control apparatus and a media processing apparatus, wherein
the media control apparatus is adapted to store a preset DTMF key sequence that indicates completion of multimedia recording, and send a recording start notification and the DTMF key sequence to the media processing apparatus, receive an event that indicates the completion of recording from the media processing apparatus, and instruct the media processing apparatus to store the recorded multimedia information when the media processing apparatus records the multimedia information; and
the media processing apparatus is adapted to receive the recording start notification and the DTMF key sequence sent by the media control apparatus, stop recording and report an event about the completion of recording to the media control apparatus after detecting that a key in the DTMF key sequence is pressed, receive a notification of storing the recorded multimedia information sent by the media control apparatus, and store the multimedia information to a storage space corresponding to a URI.

13. The system of claim 12 **characterised in that** the media processing apparatus is further adapted to play an initial prompt carrying the DTMF key sequence to a UE and send a recording success prompt to the UE.

14. The system of claim 12, **characterised in that** the media processing apparatus comprises:
media gateway (MGW) or media resource processing function (MRPF).

15. The system of claim 12, **characterised in that** the media control apparatus further comprises:
media gateway controller (MGC), mobile switching center server (MSC-server), or media resource control function (MRCF).

16. A media control apparatus, **characterised by** comprising:
a storage module, adapted to store a preset DTMF key sequence that indicates completion of multimedia recording;
a first communication module, adapted to send a recording start notification and a DTMF key sequence to a media processing apparatus, and receive an event that indicates the completion of recording reported by the media processing apparatus; and
a first recording control module, adapted to judge whether the media processing apparatus has recorded multimedia information according to the event that indicates the completion of recording reported by the media processing apparatus, and, if the multimedia information has been recorded, instruct the media processing apparatus to store the recorded multimedia information.

17. A media processing apparatus, **characterised by** comprising:
a second communication module, adapted to receive a recording start notification and a DTMF key sequence sent by a media control apparatus;
a second key detecting module, adapted to detect the pressing of keys of a UE, and, when detecting that a key in the DTMF key sequence is pressed, notify the second recording control module; and
a second recording control module, adapted to stop recording according to the notification from the second key detecting module, report an event about the completion of recording to the media control apparatus through the second communication module, and after receiving a notification of storing the recorded multimedia information sent by the media control apparatus through the second communication module, store the multimedia information to a storage space corresponding to a URI.

18. The media processing apparatus according to claim 17, further comprising a prompting module, adapted to play an initial prompt carrying the DTMF key sequence and play a recording success prompt.

19. A method for implementing multimedia recording, **characterised by** comprising:
instructing, by a media control apparatus, a media processing apparatus to start recording, and instructing the media processing apparatus to detect the key operation event of a UE;
reporting, by the media processing apparatus, the key operation event to the media control apparatus after detecting a key operation event; and instructing, by the media control apparatus, the media processing apparatus to stop recording and report statistic information after determining that a key indicating the completion of recording is pressed according to the received key operation event;
stopping recording, by the media processing apparatus, and reporting statistic information to the media control apparatus;
instructing, by the media control apparatus, the media processing apparatus to store the multimedia information after determining the completion of recording the multimedia information according to the received statistic information; and storing the multimedia information by the media processing apparatus in a storage space corresponding to a URI.

20. The method of claim 19, **characterised in that,** the notifying, by a media control apparatus, a media processing apparatus to start recording comprises:
sending, by the media processing apparatus, a recording start signal to the media control apparatus.

21. The method of claim 19, **characterised in that,** the statistic information comprises recording result parameter.

22. The method of claim 21, **characterised in that,** if a key indicating the completion of recording is pressed before a user inputs a multimedia information, the recording result parameter comprises: parameters indicating that an End Input Key is pressed and no multimedia information is recorded.

23. The method of claim 21, **characterised in that,** if a key indicating the completion of recording is pressed after a user inputs a multimedia information, the recording result parameter comprises: parameters indicating that an End Input Key is pressed and multimedia information is recorded.

24. The method of any of claims 21 to 23, **characterised in that,** the statistic information further comprises one or any combination of the following: length of the initial prompt, number of iterations, recording result, location of the record file, recording duration, and size of the record file.

25. The method of claim 19, **characterised in that,** the determining the completion of recording the multimedia information comprises:
determining, by the media control apparatus, whether the multimedia information is recorded according to the recording result parameter, and if the multimedia information is recorded, determining that the multimedia information is recorded.

26. The method of claim 19, **characterised in that,**
when determining by the media control apparatus that a key indicating the completion of recording is pressed, the method further comprises: requesting the media processing apparatus, by the media control apparatus, to prompt of successful recording to the UE; and
after the media processing apparatus stops recording, the method further comprises: prompt of successful recording to the UE.

27. A system for implementing multimedia recording, **characterised in that** the system comprises a media control apparatus and a media processing apparatus, wherein
the media control apparatus is adapted to instruct a media processing apparatus to start recording, instruct the media processing apparatus to detect the key operation event of a UE, when receiving a key operation event about completion of multimedia recording reported by the media processing apparatus, send a command for stopping recording and a request for reporting statistic information to the media processing apparatus, and when the media processing apparatus has recorded multimedia information, instruct the media processing apparatus to store the recorded multimedia information; and
the media processing apparatus is adapted to receive the recording start notification sent by the media control apparatus, report a key operation event to the media control apparatus after detecting a key operation on the UE, receive the command for stopping recording and the statistic information request from the media control apparatus, report statistic information to the media control apparatus, receive the notification of storing the recorded multimedia information sent by the media control apparatus, and store the multimedia information to a storage space corresponding to a URI.

28. The system of claim 27, **characterised in that,** the media control apparatus is further adapted to request the media processing apparatus to prompt of successful recording to the UE.

29. A media control apparatus, **characterised by** comprising:
a third communication module, adapted to instruct a media processing apparatus to start recording and detect the key operation on a UE, and receive the key operation event reported by the media processing apparatus;
a key judging module, adapted to notify a third recording control module when receiving a key operation event about completion of multimedia recording; and
the third recording control module, adapted to send a command for stopping recording and a request for reporting statistic information to the media processing apparatus through the third communication module according to the notification from the key judging module, after determining that the media processing apparatus has recorded multimedia information according to the statistic information reported by the media processing apparatus, instruct the media processing apparatus to store the recorded multimedia information through the third communication module.

30. A media processing apparatus, **characterised by** comprising:
a fourth communication module, adapted to receive a notification about starting recording and detecting the key operations on a UE, and a command for stopping recording sent by a media control apparatus;
a fourth key detecting module, adapted to report a key operation event to the media control apparatus through the fourth communication module after detecting a key operation on the UE; and
a fourth recording control module, adapted to stop recording according to the command for stopping recording, report statistic information to the media control apparatus through the fourth communication module, and after receiving a notification of storing the recorded multimedia information sent by the media control apparatus through the fourth communication module, store the multimedia information to a storage space corresponding to a URI.
